# EUROPÄISCHE PATENTSCHRIFT

(11) **EP 1 640 632 B1**
(45) Veröffentlichungstag und Bekanntmachung des Hinweises auf die Patenterteilung: **20.08.2014**
(21) Anmeldenummer: 05018462.1
(22) Anmeldetag: 25.08.2005
(51) Int. Cl.: F16D 65/00

(54) **Verschleisssensor für Fahrzeugbremsen**
Wear sensor for a vehicle brake
Capteur d'usure pour un frein d'un véhicule

(30) Priorität: 22.09.2004 DE 102004046230
(43) Veröffentlichungstag der Anmeldung: 29.03.2006
(73) Patentinhaber: BPW Bergische Achsen KG, 51674 Wiehl (DE)
(72) Erfinder: Köchl, Hans-Ulrich, 51674 Mainz (DE); Manz, Stefan, 51588 Nümbrecht (DE)
(74) Vertreter: Bungartz Christophersen Partnerschaft mbB Patentanwälte

(56) Entgegenhaltungen:
- EP-A- 0 572 802
- EP-B- 0 830 521
- WO-A-93/20365
- WO-A-98/16407

## Beschreibung

Die Erfindung betrifft eine Vorrichtung zur Erfassung mindestens eines Verschleißzustandes einer durch Drehung einer Bremswelle mit, automatischem Gestängesteller betätigbaren Fahrzeugbremse, umfassend einen auf der Bremswelle drehfest angeordneten Ring sowie ein den Ring umgebendes, drehfest mit dem Gestängesteller verbundenes Gehäuse.

Eine derartige Vorrichtung ist aus der EP 0 830 521 B1 bekannt. Der Verschleißzustand der Fahrzeugbremse wird mit Hilfe einer mit der Bremswelle an deren einem Ende drehfest verbundenen, ringförmigen und durch einen Sicherungsring axial gesicherten Scheibe erfaßt, auf deren Stirnseite eine Vielzahl Permanentmagnete nach Art einer Codierung auf mehreren Kreisbahnen angeordnet sind. Dieser Scheibe axial gegenüberliegend befinden sich innerhalb eines entweder drehfest zu dem Gestängesteller oder zu dem Fahrzeugunterboden angeordneten Gehäuses mehrere Hall-Sensoren. Diese werden von einem Strom durchflossen, der senkrecht zu dem durch die Permanentmagnete erzeugten Magnetfeld verläuft. Aufgrund des sogenannten Hall-Effektes ergibt sich hierbei eine sowohl zu dem elektrischen Strom wie auch zu dem Magnetfeld senkrecht verlaufende Spannungsdifferenz innerhalb des stromführenden Hall-Sensors. Da sich das Magnetfeld entsprechend der Codierung der Scheibe, bzw. entsprechend dem Drehwinkel der Bremswelle ändert, läßt sich aus der resultierenden Änderung der Spannungsdifferenz auf den momentanen Drehwinkel der Bremswelle in Bezug auf den Gestängesteller, und damit letztlich auf den Verschleiß der Fahrzeugbremse schließen.

Zur Kosteneinsparung sowie aus Gründen der Logistik ist es wünschenswert, baugleiche Gestängesteller auf beiden Fahrzeugseiten verwenden zu können, wie sie in Grundaufbau und Funktion beispielsweise aus der EP 0 572 802 B1 und der WO 93/20365 A1 bekannt sind. Da diese aber einen insbesondere durch ihren Fixpunkthalter bedingten unsymmetrischen Aufbau aufweisen, ergeben sich bei den ohnehin schon beengten räumlichen Gegebenheiten verschiedene Einbausituationen je nach der Fahrzeugseite, weshalb es oftmals wünschenswert ist, daß die den Verschleiß der Fahrzeugbremse erfassenden Vorrichtungen eine relativ zum Gestängesteller gleichbleibende Einbauposition auf beiden Seiten des Fahrzeugs einnehmen können.

Die Vorrichtung nach der EP 0 830 521 B1 läßt sich aufgrund der Geometrie der codierten Scheibe sowie deren Befestigung nur im Endbereich der Bremswelle, nicht aber in einer anderen axialen Position auf der Bremswelle anordnen. Es ist daher nicht möglich, daß die Vorrichtung bei Verwendung asymmetrischer Gestängesteller eine relativ zum Gestängesteller gleichbleibende Position unabhängig von der Fahrzeugseite einnimmt. Gleiches gilt für die Vorrichtung gemäß der WO 93/20365 A1.

Insoweit liegt der Erfindung die erste Aufgabe zugrunde, eine Vorrichtung der eingangs genannten Art zu schaffen, die in mehr als nur einer Position auf der Bremswelle befestigbar ist.

Zur Lösung dieser Aufgabe wird vorgeschlagen, daß der Ring aus einem inneren, mit der Bremswelle im Eingriff stehenden Adapterring und einem Außenring zusammengesetzt ist, wobei Außenring und Adapterring drehfest zueinander sind.

Auf diese Weise kann die Vorrichtung durch Austausch des inneren Adapterrings, der innen eine dem Querschnitt der Bremswelle entsprechende Kontur bzw. Öffnung aufweist, in verschiedenen Positionen auf der Bremswelle befestigt werden. Unterschiede des Bremswellendurchmessers oder deren Gestalt werden durch Austausch des Adapterrings ausgeglichen, so daß die Vorrichtung in verschieden Axialpositionen auf der Bremswelle montierbar ist ohne daß Anpassungen sonstiger Bauteile der Vorrichtung erforderlich wären. Die erfindungsgemäße Vorrichtung kann auf diese Weise eine relativ zum Gestängesteller gleichbleibende, von der Fahrzeugseite unabhängige Einbauposition einnehmen, wodurch sich Vorteile im Hinblick auf die Montage der erfindungsgemäßen Vorrichtung ergeben.

In vorteilhafter Ausgestaltung des Erfindungsgedankens wird vorgeschlagen, daß der Außenring innenseitig mit Formschlußelementen versehen ist, die mit auf der Außenseite des Adapterrings vorgesehenen Formschlußelementen einen Formschluß bilden, wodurch auf einfache Art und Weise eine sichere und vorzugsweise durch z.B. Stecken lösbare Verbindung des Außenrings mit dem austauschbaren Adapterring erreicht wird. Während der Montage kann der Monteur einer Fahrzeugachse daher einen Adapterring entsprechend der Fahrzeugseite, auf welcher die Vorrichtung montiert werden soll, auswählen, diesen mit dem Außenring zusammensetzen und die Vorrichtung montieren.

Ferner ist es von Vorteil, daß der Außenring eine mit einem Signalgeber korrespondierende Auslösestruktur aufweist, da die Auslösestruktur auf diese Weise unabhängig von dem in den Außenring eingesetzten Adapterring ist.

Der komplexe Aufbau der in der EP 0 830 521 B1 offenbarten Vorrichtung ist insoweit nachteilig, als insgesamt fünf verschiedene Hall-Sensoren dauerhaft oder im Wechsel mit Strom versorgt werden müssen und bei Stromausfall oder Ausfall eines einzigen Hall-Sensors die sicherheitsrelevante Funktion der gesamten Vorrichtung gestört ist. Zwar wird eine beachtliche Winkelauflösung erreicht, diese geht jedoch auf Kosten des Fertigungspreises, der aufgrund der pro Bremse erforderlichen fünf Hall-Sensoren sowie vor allem der aus einer sehr großen Anzahl einzelner Permanentmagnete zusammengesetzten Scheibe vergleichsweise hoch ist. In der alltäglichen Praxis ist diese große Winkelauflösung zur Beurteilung des Bremsverschleißzustandes nicht wirklich erforderlich. Es reicht vielmehr aus, wenn der Fahrer den momentanen Verschleißzustand der Fahrzeugbremsen grob abschätzen, den maximal zulässigen Verschleiß, als sicherheitsrelevante Größe aber genau feststellen kann.

Um daher eine Vorrichtung bereitzustellen, die sich durch einen einfachen Aufbau und eine große Zuverlässigkeit auszeichnet, ist eine weitere Ausgestaltung der Vorrichtung gekennzeichnet durch optisch ablesbare Mittel an dem Ring und dem Gehäuse zur Kenntlichmachung des momentan erreichten Verschleißzustandes, und einen zusätzlichen Signalgeber zur Erfassung des maximalen Verschleißzustandes.

Der momentan erreichte Verschleiß ist für den Fahrer ein in der alltäglichen Praxis wenig bedeutsamer Parameter. Es ist in der Regel ohne Belang, ob die Fahrzeugbremsen momentan zu 40% oder zu 50% verschlissen sind. Zur Kenntlichmachung des momentan erreichten Verschleißzustandes sind von außen optisch ablesbare Mittel an dem Gehäuse der Vorrichtung und dem sich demgegenüber mit zunehmenden Verschleiß verdrehenden Ring bereits völlig ausreichend. Gelegentlich kann der Fahrzeugführer mit Hilfe dieser optisch ablesbaren Mittel durch Sichtkontrolle den Verschleißzustand seine Bremsen abschätzen. Der maximale Verschleiß, der ein sicherheitsrelevanter Parameter zum Betrieb einer Fahrzeugbremse ist, wird durch den zusätzlichen Signalgeber hingegen mit großer Genauigkeit erfaßt, so daß der Fahrzeugführer in diesem Fall eine exakte Auskunft über den Verschleiß bzw. über eine verbleibende Restlaufleistung der Bremsbeläge der Fahrzeugbremse erhält.

In vorteilhafter Ausgestaltung der Erfindung wird vorgeschlagen, daß der Ring mit einer auf seinem Umfang angeordneten Auslösestruktur versehen ist, die von der Kreisform des Verschleiß bzw. über eine verbleibende Restlaufleistung der Bremsbeläge der Fahrzeugbremse erhält.

In vorteilhafter Ausgestaltung der Erfindung wird vorgeschlagen, daß der Ring mit einer auf seinem Umfang angeordneten Auslösestruktur versehen ist, die von der Kreisform des übrigen Umfangs des Rings abweicht. Auf diese Art wird eine konstruktiv einfache, mechanische Auslösestruktur geschaffen, die mit dem Signalgeber entsprechend dem Drehwinkel des Außenrings bzw. der Bremswelle korrespondiert. In diesem Zusammenhang ist es ferner Vorteil, wenn die Auslösestruktur eine radiale Erweiterung ist.

In vorteilhafter Ausgestaltung steht die Stirnfläche des Rings in mittel- oder unmittelbar reibschlüssigem Eingriff mit der Bremswelle, wodurch eine ausreichende Sicherheit gegenüber Verdrehungen des Rings relativ zur Bremswelle erreicht wird. Derartige Verdrehungen sind zu vermeiden, da sie zu einer verfälschten Information über den Verschleißzustand der Fahrzeugbremse führen.

Ferner ist es von Vorteil, wenn der Signalgeber mit der Auslösestruktur des Rings korrespondiert und so mindestens einen Drehwinkel der Bremswelle erfaßt, was z.B. dadurch erreicht werden kann, daß sich die Auslösestruktur des Rings nur über einem gewissen Winkelbereich des Umfangs des Rings erstreckt. Durch Erfassung mindestens eines Drehwinkels ist es möglich, zumindest einen Verschleißzustand der Fahrzeugbremse, vorzugsweise den maximal zulässigen Verschleiß, genau zu erfassen.

In besonders vorteilhafter Ausgestaltung des Erfindungsgedankens ist der Signalgeber ein elektrisches Schalterelement, welches über entsprechende elektrische Anschlußleitungen ein für den Fahrzeugführer erkennbares Signal abgibt. Die auf diese Weise einsetzbaren, herkömmlichen Schalterelemente zeichnen sich durch ihre hohe Zuverlässigkeit aus.

Mit einer weiteren vorteilhaften Ausgestaltung wird vorgeschlagen, daß die optisch ablesbaren Mittel an dem Ring angeformte Vorsprünge und an dem Gehäuse angeformte Vorsprünge sind, die sich jeweils im wesentlichen in Axialrichtung der Bremswelle erstrecken. Da die ablesbaren Mittel sowohl des Gehäuses als auch des Rings durch Vorsprünge gebildet sind, kann ihre relative Stellung zueinander nicht nur durch reine Sichtkontrolle, sondern bei Dunkelheit auch durch Tasten erfühlt werden. Ein weiterer Vorteil ergibt sich in Bezug auf die Montage der Vorrichtung, da die Vorsprünge von den Fingern des Monteurs gehalten und so z.B. nach Austausch der Bremsbeläge in ihrer Grundstellung gegen Verdrehen gesichert werden können. Wenn der Ring und das Gehäuse durch Spritzgießen hergestellte Kunststoffteile sind, ist es zweckmäßig, daß sich die Vorsprünge im wesentlichen in Axialrichtung der Bremswelle erstrecken, da hierdurch der fertigungstechnische Aufwand, z.B. hinsichtlich der verwendeten Spritzgußwerkzeuge, gering gehalten wird.

Eine weitere vorteilhafte Ausgestaltung sieht vor, daß der Ring nahe seinem Umfang mit einer stirnseitigen Labyrinth-Dichtung versehen ist, die das Gehäuse gegenüber Verunreinigungen abdichtet, da derartige Labyrinth-Dichtungen bereits im Spritzgußverfahren berücksichtigt werden können und sich zusätzliche Dichtungsteile erübrigen.

In besonders vorteilhafter Ausgestaltung des Erfindungsgedankens ist die Form des Gehäuses im wesentlichen an die Kontur des Gehäuses des Gestängestellers angepaßt. Da das Gehäuse der Vorrichtung nicht oder nur wenig über die Kontur des Gehäuses des Gestängestellers hervorsteht, bleibt es vor Beschädigungen, beispielsweise durch Steinschlag, teilweise durch das metallische Gehäuse des Gestängestellers geschützt. Vorteilhaft ist das Gehäuse formschlüssig mit dem Gestängesteller verbunden und so gegen Verdrehen gesichert, wobei es ferner von Vorteil ist, wenn der Formschluß über am Gehäuse angeformte Formschlußelemente erfolgt, die das Gehäuse des Gestängestellers teilweise übergreifen. Mit Hilfe dieser Ausgestaltung läßt sich die erfindungsgemäße Vorrichtung bei der Montage aus axialer Richtung leicht mit dem Gehäuse des Gestängestellers verbinden. Im Falle der nachträglichen Ausstattung einer bereits im Einsatz befindlichen Fahrzeugbremse mit einer erfindungsgemäßen Vorrichtung kann auf zusätzliche Befestigungen beispielsweise Verschraubungen verzichtet werden. Solche Verschraubungen sind immer mit einem Umbau bzw. Eingriff in das Gehäuse des vorhandenen Gestängestellers, z.B. durch Einbringen zusätzlicher Bohrungen, verbunden. Da derartige Eingriffe in bestehende, oftmals sensible Komponenten zu vermeiden sind, eignet sich die erfindungsgemäße Vorrichtung in besonderer Weise auch als Nachrüstlösung.

In vorteilhafter Ausgestaltung der Erfindung wird vorgeschlagen, daß die axiale Sicherung des Rings statt dessen über das den Gestängesteller in seiner Axialposition auf der Bremswelle sichernde Element erfolgt, wodurch zusätzliche Bauteile für die Axialsicherung entfallen und die erforderliche Bauteilzahl gering gehalten wird.

Schließlich wird vorgeschlagen, daß der Signalgeber durch eine am Gehäuse angeformte, die Anschlußleitung aufnehmende Klemmstruktur gegen Herausziehen gesichert ist. Denn vor allem während der Montage der erfindungsgemäßen Vorrichtung kann es immer wieder zu unbeabsichtigten Zugbelastungen der Anschlußleitung des Signalgebers kommen, die zur Beschädigung des elektrischen Schalterelements, z.B. der das Schalterelement mit der Anschlußleitung verbindenden Lötstellen, führen kann.

Weitere Einzelheiten und Vorteile ergeben sich aus der nachfolgenden Beschreibung der zugehörigen Zeichnungen, die eine erfindungsgemäße Vorrichtung zeigen. In den Zeichnungen zeigen :
- Fig. 1: eine Explosionsdarstellung einer erfindungsgemäßen Vorrichtung,
- Fig. 2: eine perspektivische Darstellung einer erfindungsgemäßen Vorrichtung in zusammengebautem Zustand,
- Fig. 3: zwei voneinander verschiedene Einbausituationen einer erfindungsgemäßen Vorrichtung je nach Fahrzeugseite,
- Fig. 4: eine Detailansicht gemäß Ausschnitt L aus Fig. 3 und
- Fig. 5: eine Detailansicht gemäß Ausschnitt R aus Fig. 3.

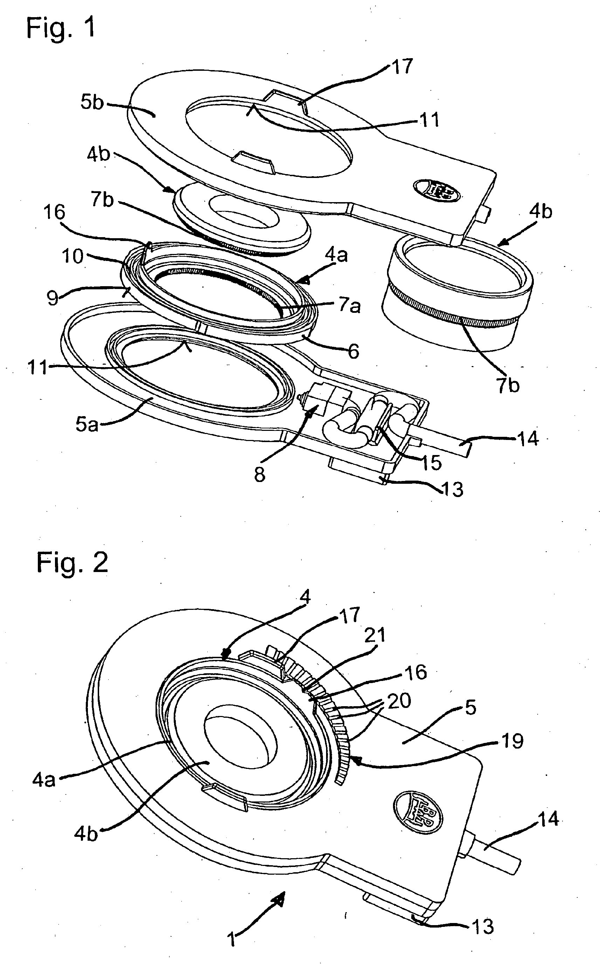

Fig. 1 zeigt eine Explosionsdarstellung einer erfindungsgemäßen Vorrichtung, die aus einem Ring 4, der aus einem Außenring 4a und einem Adapterring 4b zusammengesetzt ist, und einem aus zwei Teilen 5a, 5b zusammengesetzten Gehäuse 5 mit darin angeordnetem Signalgeber 8, der über eine Anschlußleitung 14 kontaktiert ist, besteht. Der Außenring 4a weist an seiner Innenseite Formschlußelemente 7a auf, die nach Art einer Verzahnung mit auf der Außenseite des Adapterrings 4b angeordneten Formschlußelementen 7b im Eingriff stehen, und so einen Formschluß bewirken. Der Adapterring 4b kann in der in Fig. 1 links dargestellten Weise von oben her in den Außenring 4a eingesetzt werden. Das Ausführungsbeispiel läßt ferner einen an dem Außenring 4a angeformten Vorsprung 16 sowie an dem Gehäuseteil 5a angeformte Vorsprünge 17 erkennen, die den Drehwinkel zwischen der Bremswelle einerseits und dem Gehäuse 5 andererseits durch Sichtkontrolle erkennen lassen. Durch Festhalten zweier Vorsprünge 16, 17 ist es während der Montage der Vorrichtung möglich, Verdrehungen zwischen dem Ring 4 und dem Gehäuse zu vermeiden und die Vorrichtung so genau in der gewünschten Stellung zu sichern. Der Außenring 4a ist über einen Winkelbereich von in etwa 90° mit einer zusätzlichen Übertragungsstruktur 6 versehen, die mit dem Signalgeber 8 korrespondiert. Die Übertragungsstruktur 6 wird durch eine radiale Erweiterung des Außenumfangs 9 des Außenrings 4a gebildet, der sich gemeinsam mit der Bremswelle gegenüber dem außen im Gehäuse 5 sitzenden Signalgeber 8 entsprechend dem zunehmenden Bremsverschleiß dreht. Ist ein bestimmter Drehwinkel erreicht, der dem maximalen Verschleiß der Fahrzeugbremse entspricht, ändert sich der Abstand zwischen dem Signalgeber 8 und dem Umfang 9 des Außenrings 4a, so daß der Signalgeber 8, der ein elektrisches Schalterelement ist, schaltet und so ein den maximalen Verschleißzustand anzeigendes elektrisches Signal liefert. Vorzugsweise ist der Schalter 8 während des Betriebs der Fahrzeugbremse geschlossen und wird durch Erreichen des maximalen Verschleißzustandes geöffnet, wodurch dann die eigentliche Signalabgabe erfolgt.

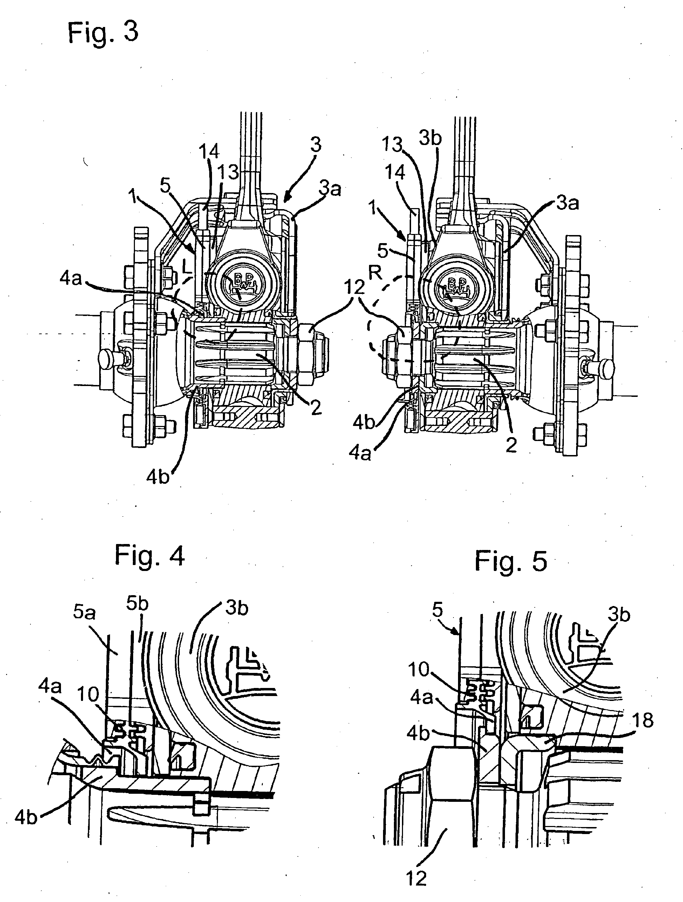

In Fig. 1 sind ferner zwei verschiedene Ausführungsformen des inneren Adapterrings - dargestellt. Der in Fig. 1 linke Adapterring ist aus Kunststoff -gefertigt und für eine Montage der Vorrichtung im Endbereich der Bremswelle vorgesehen, wie sie anhand der rechten Hälfte der Fig. 3 dargestellt und beschrieben ist. Der auf der rechten Seite der Fig. 1 dargestellte Adapterring 4b ist hingegen aus Metall und für eine in der linken Hälfte der Fig. 3 dargestellte Einbausituation ausgelegt. Ein solcher metallischer Ring ist in vielen Fällen ohnehin schon auf der Welle vorhanden, weshalb er durch einen im wesentlichen baugleichen jedoch zusätzlich mit Formschlußelementen 7b versehenen Adapterring 4b ausgetauscht werden kann.

Die an den jeweiligen Radbremsen vorgesehen Vorrichtungen lassen sich elektrisch in Reihe schalten, wodurch die Länge der erforderlichen Anschlußleitungen insgesamt gering bleibt. Das von einem Signalgeber 8 abgegebene und dem Fahrzeugführer angezeigte Signal kann von diesem aufgrund der Reihenschaltung nicht direkt einer bestimmten Fahrzeugbremse zugeordnet werden, weshalb es erforderlich ist, daß der Fahrzeugführer bei Vorliegen eines solchen Signals die Fahrzeugbremsen nachträglich anhand der optisch ablesbaren Mittel 16, 17 durch Sichtkontrolle kontrolliert und die verschlissene identifiziert. Daneben ist es natürlich auch möglich, sämtliche Vorrichtungen elektrisch parallel zu schalten, wodurch sich zwar die Zahl der Anschlußleitungen erhöht, andererseits aber eine separate Anzeige für jede Bremse möglich ist.

Um den Signalgeber 8 gegen Herausziehen zu sichern, ist, wie Fig. 1 ebenfalls erkennen läßt, die Gehäusehälfte 5a mit einer Klemmstruktur 15 versehen, in welcher die elektrische Anschlußleitung 14 mäanderartig eingelegt und so gegen Herausziehen gesichert ist.

In Fig. 2 ist eine der in Fig. 1 dargestellten Vorrichtung ähnliche Vorrichtung im Zusammenbau dargestellt. Abweichend zu der in Fig. 1 dargestellten Vorrichtung sind die an dem Gehäuse vorgesehenen und nach Art von Vorsprüngen 17 gestalteten optisch ablesbaren Mittel durch eine auf dem Gehäuse 5 angeordnete Skala 19 ergänzt, die eine den Verschleiß anzeigende Stufenteilung aufweist. Die Skala 19 ist entsprechend dem zunehmendem Verschleiß der Fahrzeugbremse halbsichelförmig ausgebildet, wobei das spitze Ende dem maximalen Verschleiß entspricht. Die Skala 19 erstreckt sich am Gehäuse 5 um dessen Mittelöffnung 11 herum, über den gesamten Drehbereich des Vorsprungs 16 des Rings 4 und ist gegenüber der übrigen Stirnfläche des Gehäuses 5 erhaben. Darüber hinaus ist die Skala 19 mit Kerben 20 versehen, die die Stufenteilung bilden. Da die Skala 19 erhaben und mit Kerben 20 versehen ist, bleibt sie auch bei stärkerer Verschmutzung ablesbar.

Die durch die Kerben 20 gebildete Stufenteilung entspricht jeweils einer bestimmten Verschleißzunahme, wobei der Abstand zweier Kerben 20 vorzugsweise ein bis drei Millimeter Abrieb des Bremsbelags entspricht. Aufgrund dieser Teilung ist auch das Nachrüsten der erfindungsgemäßen Vorrichtung in eine bereits im Einsatz befindliche Fahrzeugbremse mit teilverschlissenen Bremsbelägen möglich, wozu die Restverschleißstärke, d.h. die noch nutzbare Stärke der Reibbeläge, gemessen und bei der Montage der Vorrichtung über die Position des Vorsprungs 16 gegenüber der Skala 19 als momentaner Verschleiß eingestellt wird. Da der Vorsprung 16 relativ breit ist, ist auch dieser mit einer Kerbe 21 versehen, deren Fluchtung mit den Kerben 20 der Skala 19 den momentanen Verschleiß hinreichend genau erkennen läßt.

In Fig. 2 ist zu erkennen, daß sich die von außen gut sichtbaren Vorsprünge 16 des Rings 4 sowie 17 des Gehäuses 5 in einer in etwa um drei Kerben 20 der Skala 19 gegeneinander verdrehten Stellung befinden. Diese Stellung der Vorsprünge 16, 17 entspricht teilverschlissenen Bremsbelägen, die beispielsweise einen Abrieb von drei Millimetern erreicht haben. In ihrer Grundeinstellung stehen sich die Vorsprünge 16, 17 genau gegenüber. Mit zunehmendem Verschleiß entfernt sich dann der Vorsprung 16 des Rings 4 entsprechend dem Drehwinkel der Bremswelle von dem benachbarten Vorsprung 17 des Gehäuses 5 bis er bei Erreichen eines Drehwinkels von in etwa 90° den maximal zulässigen Verschleiß am unteren Ende der Skala 19 anzeigt.

In Fig. 3 sind die verschiedenen Einbausituationen erfindungsgemäßer Vorrichtungen 1 für beide Fahrzeugseiten gegenübergestellt. Die Bremswellen 2 beider Fahrzeugbremsen sind mit baugleichen, u.a. aufgrund ihres Fixpunkthalters 3a unsymmetrischen Gestängestellern 3 ausgerüstet. Die Vorrichtungen 1 sind über die nach Art von Laschen geformten Formschlußelemente 13 mit der dem Fixpunkthalter 3a abgewandten Seite des Gehäuses 3b des Gestängestellers 3 verbunden. Da die in der in Fig. 3 linke Bremswelle 2 dort, wo die Vorrichtung 1 montiert ist, ohnehin eine mit der Bremswelle 2 drehfest verbundene, metallische Hülse aufweist, kann eine solche auch als Adapterring 4b dienen, mit welchem der Außenring 4a der Vorrichtung 1 drehfest verbunden ist. Die ohnehin vorhandene metallische Hülse ist lediglich gegen eine Hülse zu ersetzen, die die in Fig. 1 dargestellten Formschlußelemente 7a aufweist, ansonsten baugleich ist.

Auf der in Fig. 3 rechten Seite ist eine weitere Einbauposition der Vorrichtung 1 auf der gegenüberliegenden Fahrzeugseite dargestellt, bei der ein gemäß den Fign.- 1 (linke Seite) und 2 ausgebildeter Adapterring 4b in den Außenring 4a der Vorrichtung 1 eingesetzt ist. Die axiale Festlegung des Rings 4 erfolgt für beide Fahrzeugseiten über das auch den automatischen Gestängesteller 3 in seiner Axialposition sichernde Sicherungselement 12.

In Fig. 4 ist eine Detailansicht gemäß dem linken Ausschnitt L aus Fig. 3 dargestellt. Gut erkennen läßt sich der zweiteilige Aufbau des aus dem Adapterring 4b und dem Außenring 4a zusammengesetzten Rings 4. Der Adapterring 4a ist eine nach Art eines Blechformteils ausgebildete metallische Hülse, die ohnehin auf der Bremswelle 2 vorhanden und axial über das Gehäuse 3b des Gestängestellers 3 bzw. das diesen sichernde Sicherungselement 12 gesichert ist. Soll die bereits im Einsatz befindliche Fahrzeugbremse nun mit einer erfindungsgemäßen Vorrichtung nachgerüstet werden, so ist der vorhandene Ring gegen einen im wesentlichen baugleichen aber mit auf dessen Außenfläche zusätzlich vorgesehenen Formschlußelementen zu tauschen. Das über die laschenartigen Formschlußelemente 13 ausschließlich formschlüssig an dem Gestängestellergehäuse befestigbare Gehäuse 5 wird dann gemeinsam mit dem aus Außenring 4a und Adapterring 4b zusammengesetzten Ring 4 auf die Bremswelle 2 geschoben und montiert.

In Fig. 5 ist eine Detailansicht gemäß dem rechten Ausschnitt R aus Fig. 3 dargestellt. Die Vorrichtung ist im Endbereich der Bremswelle 2 montiert. Als Adapterring 4b dient ein zusätzlicher, aus Kunststoff gefertigter Ring, dessen Öffnung an den Durchmesser des Bremswellenendes angepaßt ist. Gesichert ist der Adapterring 4b über das Sicherungselement 12, so daß die Stirnflächen des Adapterrings 4b reibschlüssig im Eingriff mit der Bremswelle 2 stehen. Dieser Eingriff ist im Gegensatz zu dem anhand von Fig. 4 erläuterten Adapterring 4b, der unmittelbar an der Bremswelle 2 anliegt, in diesem Fall nur mittelbar, d.h. über den zusätzlichen Ring 18 und das Sicherungselement 12.

### Bezugszeichen:

- 1: Vorrichtung
- 2: Bremswelle
- 3: Gestängesteller
- 3a: Fixpunkthalter
- 3b: Gehäuse des Gestängestellers
- 4: Ring
- 4a: Außenring
- 4b: Adapterring
- 5: Gehäuse
- 5a: Gehäusehälfte
- 5b: Gehäusehälfte
- 6: Auslösestruktur
- 7a: Formschlußelemente
- 7b: Formschlußelemente
- 8: Signalgeber, Schalterelement
- 9: Umfang, Umfangsfläche
- 10: Labyrinthdichtung
- 11: Mittelöffnung des Gehäuses
- 12: Sicherungselement
- 13: Formschlußelement
- 14: Anschlußleitung
- 15: Klemmstruktur
- 16: optische Mittel, Vorsprung
- 17: optische Mittel, Vorsprung
- 18: Ring
- 19: Skala
- 20: Kerbe
- 21: Kerbe

## Patentansprüche

1. Vorrichtung zur Erfassung mindestens eines Verschleißzustandes einer durch Drehung einer Bremswelle (2) mit automatischem Gestängesteller (3) betätigbaren Fahrzeugbremse, umfassend einen auf der Bremswelle (2) drehfest angeordneten Ring (4) sowie ein den Ring (4) umgebendes, drehfest mit dem Gestängesteller (3) verbundenes Gehäuse (5),
**dadurch gekennzeichnet,**
**daß** der Ring (4) aus einem inneren, mit der Bremswelle (2) im Eingriff stehenden Adapterring (4b) und einem Außenring (4a) zusammengesetzt ist, wobei Außenring (4a) und Adapterring (4b) drehfest zueinander sind.

2. Vorrichtung nach Anspruch 1, **dadurch gekennzeichnet, dass** sie optisch ablesbare Mittel (16, 17) an dem Ring (4) und dem Gehäuse (5) zur Kenntlichmachung des momentan erreichten Verschleißzustandes, und einen zusätzlichen Signalgeber (8) zur Erfassung des maximalen Verschleißzustandes aufweist.

3. Vorrichtung nach Anspruch 1, **dadurch gekennzeichnet, daß** der Außenring (4a) innenseitig mit Formschlußelementen (7a) versehen ist, die mit auf der Außenseite des Adapterrings (4b) vorgesehenen Formschlußelementen (7b) einen Formschluß bilden.

4. Vorrichtung nach Anspruch 1, **dadurch gekennzeichnet, daß** der Außenring (4a) eine mit einem Signalgeber (8) korrespondierende Auslösestruktur (6) aufweist.

5. Vorrichtung nach Anspruch 1 und Anspruch 2, **dadurch gekennzeichnet, daß** der Ring (4) mit einer auf seinem Umfang (9) angeordneten Auslösestruktur (6) versehen ist, die von der Kreisform des übrigen Umfangs (9) des Rings (4) abweicht.

6. Vorrichtung nach Anspruch 5, **dadurch gekennzeichnet, daß** die Auslösestruktur (6) eine radiale Erweiterung ist.

7. Vorrichtung nach Anspruch 1 und Anspruch 2, **dadurch gekennzeichnet, daß** die Stirnflächen des Rings (4) in reibschlüssigem Eingriff mit der Bremswelle (2) stehen.

8. Vorrichtung nach einem der vorhergehenden Ansprüche, **dadurch gekennzeichnet, daß** der Signalgeber (8) mit der Auslösestruktur (6) des Rings (4) korrespondiert und so mindestens einen Drehwinkel der Bremswelle (2) erfaßt.

9. Vorrichtung nach Anspruch 8, **dadurch gekennzeichnet, daß** der Signalgeber (8) ein elektrisches Schalterelement ist.

10. Vorrichtung nach einem der vorhergehenden Ansprüche, **dadurch gekennzeichnet, daß** die optisch ablesbaren Mittel (16, 17) an dem Ring (4) angeformte Vorsprünge (16) und an dem Gehäuse (5) angeformte Vorsprünge (17) sind, die sich jeweils im wesentlichen in Axialrichtung der Bremswelle (2) erstrecken.

11. Vorrichtung nach einem der vorhergehenden Ansprüche, **dadurch gekennzeichnet, daß** der Ring (4) nahe seinem Umfang (9) mit einer stirnseitigen Labyrinthdichtung (10) versehen ist, die das Gehäuse (5) gegenüber Verunreinigungen abdichtet.

12. Vorrichtung nach einem der vorhergehenden Ansprüche, **dadurch gekennzeichnet, daß** die Form des Gehäuses (5) im wesentlichen an die äußere Kontur des Gehäuses des Gestängestellers (3) angepaßt ist.

13. Vorrichtung nach einem der vorhergehenden Ansprüche, **dadurch gekennzeichnet, daß** das Gehäuse (5) formschlüssig mit dem Gestängesteller (3) verbunden und so gegen Verdrehen gesichert ist.

14. Vorrichtung nach Anspruch 13, **dadurch gekennzeichnet, daß** der Formschluß über am Gehäuse (5) angeformte Formschlußelemente (13) erfolgt, die das Gehäuse des Gestängestellers (3) teilweise übergreifen.

15. Vorrichtung nach einem der vorhergehenden Ansprüche, **dadurch gekennzeichnet, daß** die axiale Sicherung des Gehäuses (5) über das den Gestängesteller (3) in seiner Axialposition auf der Bremswelle (2) sichernde Element (12) erfolgt.

16. Vorrichtung nach einem der vorhergehenden Ansprüche, **dadurch gekennzeichnet, daß** der Signalgeber (8) durch eine am Gehäuse (5) angeformte, die Anschlußleitung (14) aufnehmende Klemmstruktur (15) gegen Herausziehen gesichert ist.

## Claims

1. Device for sensing at least one state of wear of a vehicle brake which can be activated by rotating a brake shaft (2) with an automatic slack adjuster (3), comprising a ring (4) which is mounted in a rotationally fixed fashion on the brake shaft (2), and a housing (5) which surrounds the ring (4) and is connected to the slack adjuster (3) in a rotationally fixed fashion,
**characterized**
**in that** the ring (4) is composed of an internal adapter ring (4b) which is in engagement with the brake shaft (2) and an external ring (4a), wherein the external ring (4a) and the adapter ring (4b) are connected to one another in a rotationally fixed fashion.

2. Device according to Claim 1, **characterized in that** it has optically readable means (16, 17) on the ring (4) and the housing (5) for indicating the currently reached state of wear, and an additional signal transmitter (8) for detecting the maximum state of wear.

3. Device according to Claim 1, **characterized in that** the external ring (4a) is provided on the inside with positively engaging elements (7a) which form a positive engagement with positively engaging elements (7b) provided on the outside of the adapter ring (4b).

4. Device according to Claim 1, **characterized in that** the external ring (4a) has a triggering structure (6) which corresponds to a signal transmitter (8).

5. Device according to Claim 1 and Claim 2, **characterized in that** the ring (4) is provided with a triggering structure (6) which is arranged on its circumference (9) and deviates from the circular shape of the rest of the circumference (9) of the ring (4).

6. Device according to Claim 5, **characterized in that** the triggering structure (6) is a radial widened portion.

7. Device according to Claim 1 and Claim 2, **characterized in that** the end faces of the ring (4) are in frictionally locking engagement with the brake shaft (2).

8. Device according to one of the preceding claims, **characterized in that** the signal transmitter (8) corresponds with the triggering structure (6) of the ring (4) and therefore detects at least one rotational angle of the brake shaft (2).

9. Device according to Claim 8, **characterized in that** the signal transmitter (8) is an electrical switch element.

10. Device according to one of the preceding claims, **characterized in that** the optically readable means (16, 17) are projections (16) which are integrally formed onto the ring (4) and projections (17) which are integrally formed onto the housing (5) and, said projections (16, 17) respectively extending substantially in the axial direction of the brake shaft (2).

11. Device according to one of the preceding claims, **characterized in that** the ring (4) is provided near to its circumference (9) with an end-side labyrinth seal (10) which seals off the housing (5) against impurities.

12. Device according to one of the preceding claims, **characterized in that** the shape of the housing (5) is adapted substantially to the external contour of the housing of the slack adjuster (3).

13. Device according to one of the preceding claims, **characterized in that** the housing (5) is connected in a positively locking fashion to the slack adjuster (3) and is therefore secured against rotation.

14. Device according to Claim 13, **characterized in that** the positive engagement occurs by means of positively locking elements (13) which are integrally formed onto the housing (5) and partially engage over the housing of the slack adjuster (3).

15. Device according to one of the preceding claims, **characterized in that** the axial securement of the housing (5) occurs via the element (12) which secures the slack adjuster (3) in its axial position on the brake shaft (2).

16. Device according to one of the preceding claims, **characterized in that** a clamping structure (15) which is integrally formed onto the housing (5) and accommodates the connecting line (14) secures the signal transmitter (8) against being pulled out.

## Revendications

1. Dispositif de détection d'au moins un état d'usure d'un frein de véhicule pouvant être actionné par rotation d'un arbre de frein (2) au moyen d'un régleur de timonerie (3) automatique, comprenant une bague (4) disposée solidairement en rotation sur l'arbre de frein (2) ainsi qu'un carter (5) entourant la bague (4), relié solidairement en rotation au régleur de timonerie (3) ;
**caractérisé en ce que** :
la bague (4) est composée d'une bague d'adaptateur (4b) intérieure en prise avec l'arbre de frein (2) et d'une bague extérieure (4a), la bague extérieure (4a) et la bague d'adaptateur (4b) étant solidaires en rotation l'une par rapport à l'autre.

2. Dispositif selon la revendication 1, **caractérisé en ce qu'**il comporte des moyens de lecture optique (16, 17) disposés au niveau de la bague (4) et du carter (5) permettant de prendre connaissance de l'état d'usure momentanément atteint ainsi qu'un capteur de signaux (8) supplémentaire permettant de détecter l'état d'usure maximal.

3. Dispositif selon la revendication 1, **caractérisé en ce que** la bague extérieure (4a) est pourvue, sur le côté intérieur, d'éléments de complémentarité de formes (7a) formant une complémentarité de formes avec les éléments de complémentarité de formes (7b) prévus sur le côté extérieur de la bague d'adaptateur (4b).

4. Dispositif selon la revendication 1, **caractérisé en ce que** la bague extérieure (4a) comporte une structure de déclenchement (6) correspondant avec un capteur de signaux (8).

5. Dispositif selon les revendications 1 et 2, **caractérisé en ce que** la bague (4) est pourvue d'une structure de déclenchement (6) disposée sur sa périphérie (9) et s'écartant de la forme circulaire de la périphérie (9) restante de la bague (4).

6. Dispositif selon la revendication 5, **caractérisé en ce que** la structure de déclenchement (6) est un élargissement radial.

7. Dispositif selon les revendications 1 et 2, **caractérisé en ce que** les surfaces avant de la bague (4) sont en prise par complémentarité de frottements avec l'arbre de frein (2).

8. Dispositif selon l'une quelconque des revendications précédentes, **caractérisé en ce que** le capteur de signaux (8) correspond à la structure de déclenchement (6) de la bague (4) et détecte ainsi au moins un angle de rotation de l'arbre de frein (2).

9. Dispositif selon la revendication 8, **caractérisé en ce que** le capteur de signaux (8) est un élément de contacteur électrique.

10. Dispositif selon l'une quelconque des revendications précédentes, **caractérisé en ce que** les moyens de lecture optique (16, 17) sont des saillies (16) formées au niveau de la bague (4) et des saillies (17) formées au niveau du carter (5) s'étendant respectivement pour l'essentiel dans la direction axiale de l'arbre de frein (2).

11. Dispositif selon l'une quelconque des revendications précédentes, **caractérisé en ce que** la bague (4) est pourvue, à proximité de sa périphérie (9), d'un joint en labyrinthe (10) placé du côté avant et étanchéifiant le carter (5) pour le protéger des polluants.

12. Dispositif selon l'une quelconque des revendications précédentes, **caractérisé en ce que** la forme du carter (5) est pour l'essentiel adaptée au contour extérieur du carter du régleur de timonerie (3).

13. Dispositif selon l'une quelconque des revendications précédentes, **caractérisé en ce que** le carter (5) est relié par complémentarité de formes au régleur de timonerie (3) et ainsi sécurisé contre la torsion.

14. Dispositif selon la revendication 13, **caractérisé en ce que** la complémentarité de formes se produit via les éléments de complémentarité de formes (13) formés au niveau du carter (5) et engrenant en partie le carter du régleur de timonerie (3).

15. Dispositif selon l'une quelconque des revendications précédentes, **caractérisé en ce que** la fixation axiale du carter (5) se produit via l'élément (12) fixant le régleur de timonerie (3) dans sa position axiale sur l'arbre de frein (2).

16. Dispositif selon l'une quelconque des revendications précédentes, **caractérisé en ce que** le capteur de signaux (8) est sécurisé contre l'extraction par une structure de coincement (15) formée au niveau du carter (5) et recevant le câble de raccordement (14).
